# EUROPEAN PATENT SPECIFICATION

(11) **EP 3 335 603 B1**
(45) Date of publication and mention of the grant of the patent: **01.12.2021**
(21) Application number: 16204996.9
(22) Date of filing: 19.12.2016
(51) Int. Cl.: A47J 43/07

(54) **A KITCHEN DEVICE**
KÜCHENVORRICHTUNG
DISPOSITIF DE CUISINE

(43) Date of publication of application: 20.06.2018
(73) Proprietor: BSH Hausgeräte GmbH, 81739 München (DE)
(72) Inventor: Koscak, Ales, 6230 Postojna (SI); Uplaznik, Marko, 3312 Prebold (SI); Orbanic, Henri, 1000 Ljubljana (SI)

(56) References cited:
- EP-A1- 2 772 163
- WO-A1-2005/013787
- WO-A2-2008/087644
- AU-B2- 2011 202 631
- US-A1- 2007 095 961
- US-A1- 2016 045 073

## Description

The present invention relates to a kitchen device, and in particular to a kitchen device comprising a container that is supported on a motor base with driving means, wherein the container comprising a processing tool at the bottom area for processing food stuff.

A kitchen device is commonly used to make juice of fruits or vegetables by pulverizing and blending the fruits or vegetables with a cutter of shape blades. A commonly known kitchen device comprises a motor base with driving means on which a container, serving as a receptacle for pieces of fruits and/or vegetables, is mounted. The processing tool is arranged at the bottom of the container and is driven by driving means contained in the motor base to pulverize the fruits and/or vegetables. The container has usually shape of a deep jug, therefore the processing tool is detachable connected with the container for easy cleaning processing tool. Inner surface of the bottom part of the container is usually as universal surface for all kinds of processing foods as a result of attempts to reconcile efficiency for broad scope of foods. This causes that the efficiency of pulverizing or blending a certain products is unsatisfactory.

The patent application US 2016/ 0 045 073 A1 discloses a blending system which may comprise a blender base, a container and a blending volume reduction device. The blending volume reduction device may be removably inserted into the container of the blender system at various positions. The positions may alter the working volume of the container when the blending volume reduction device is inserted in the container.

The objective of the present invention is to provide a kitchen device, and more particular a jug for the kitchen device, wherein the efficiency of pulverizing or blending broad range of products can be improved.

This object is achieved by the technical features described in the characterizing part of the claim 1. Additional technical features and preferred embodiments of the invention are given in the dependent claims.

The foregoing general description and detailed description, given hereafter, are merely exemplary and are understood as additional explanations of the claimed invention. Other advantages and features of the invention result from the following descriptions, drawings and claims.

In accordance with present invention, there is provided a kitchen device for processing food stuff, comprising a driving means suitable for driving a processing arrangement and equipped with a processing tool disposed in a bottom area of a jug. The jug comprising at least one interchangeable insert unit to be placed on the inner surface of the bottom area. Said insert unit being adapted to change the shape of the inner surface in order to process different kinds of food stuff where the insert unit is firstly mounted on the processing arrangement and then they are placed and fixed in the bottom area of the jug.

The bottom area of the jug extends on the inner surface from the bottom of the jug and surrounds the processing tool and reaches slightly above the processing tool. Arrangement of the bottom area directly affects food processing process, because in this area the product namely food is the most intensively processed, due to the proximity of the processing tool and a processing surface. The processing surface is created by inner surface of the insert unit which is placed to the bottom area and takes a part with food preparation process. In the present invention a receiving surface means a part of the inner surface of the jug at the bottom area, for receiving the insert unit.

Advantageously, shape of the inner surface of the bottom area of the jug can be changed by replacing the insert unit so as to increase the efficiency of pulverizing or blending broad range of the products, also improves quality of the resulting food product and shorten preparation time required for food processing.

In the preferred embodiment of the invention kitchen device, in particular the processing arrangement having a coupling means for coaxially fixing the insert unit to the processing arrangement. The fixing of the insert unit is realized by standard screw, bayonet connection, snap lock connection and/or simply press fit connection. The insert unit is detachable connected to the processing arrangement. In another embodiment of the invention, the insert unit is detachable fastened to the jug by standard screw connection, bayonet connection, snap lock connection and/or simply press fit connection. Therefore an easy to connect and disconnect coupling is achieved. In another embodiment of the invention, the insert unit is detachable connected to the processing arrangement and at the same time to the jug by standard screw connection, bayonet connection, snap lock connection and/or simply press fit connection. Therefore an extra reinforced connection is obtained.

Favorable the insert unit is cup-shaped and surrounds the processing tool. This means that the shape of inner surface at the bottom area of the jug can be totally changed at once to new, correspondingly to used the insert unit. The lateral surface of the insert unit is preferable configured as cylindrical or frusto-conical, for easy fastening and/or changing. When the jug is assembled with the processing arrangement and insert unit, the lateral of the insert unit has contact with whole receiving surface of the jug. In the other embodiment of the invention the lateral surface of the insert unit has partially contact with the receiving surface of the jug and/or has only contact with an upper edge of the insert unit or has no any contact with the receiving surface. Therefore an arrangement of the inner surface of the jug is easy to adapt in relation to technology and possibilities of producing the jug or/and the insert unit.

According to the invention at least one insert unit comprising a certain processing surface for preparing specific food product for efficiently processing a specific type of food. It is understood that one of the insert unit can comprise an universal processing surface for processing broad range of foods.

In the embodiment which is not part of the invention, for processing specific kinds of foods, namely: chocolate or nuts, the processing surface of the insert unit is formed by lateral surface of solid of revolution created by rotation a curve or a line around rotational axis of the insert unit. This causes that blended or pulverized product can freely rotates with a high speed, given by rotation of processing tool. Therefore the appropriate conditions to process such kind of foods are reached.

According to the invention, the processing surface of the insert unit comprises at least one rib protruding towards the processing tool and arranged in parallel to the rotational axis of the insert unit. Preferably the rib having a shape of a strip with edge, what causes that the rotation speed of processing product, namely: ice is slightly slowed down. Additionally product is being shattered on the edge of the rib for increasing efficiency.

In another embodiment of the invention, the rib has a shape of the prism directed towards to the processing tool and arranged in parallel to the rotational axis of the insert unit, that gives well oriented flow direction for better flow of the processed food, namely fluid or soup. This arraignment is favorable for vertical mixing of the product, along the rotational axis of the insert unit. Therefore the appropriate conditions for efficiently mixing and blending food are achieved.

The present invention provides a kitchen device, and in particular a kitchen device comprising a container with at least one interchangeable insert unit, placed in a bottom area for processing broad scope of food. Said insert unit changes shape of a inner surface in the bottom area for efficiently processing many kinds of food.

The features of the invention believed to be novel are set forth with particularity in the appended claims. The invention itself, however, may be best understood by reference to the following detailed description of the invention, which describes an exemplary embodiment of the invention, taken in conjunction with the accompanying drawings, in which:
- Fig. 1: exemplary shows a kitchen device with a jug.
- Fig. 2: shows a processing arrangement with processing tool.
- Fig. 3: shows a section of the jug.
- Fig. 4: shows insert for preparing chocolate or nuts which is not part of the invention.
- Fig. 5: shows insert for preparing fluids.
- Fig. 6: shows insert for crushing ice.

In cooperation with attached drawings, the technical contents and detailed description of the present invention are described thereinafter according to a preferable embodiment, being not used to limit its executing scope. Any equivalent variation and modification made according to appended claims is all covered by the claims claimed by the present invention.

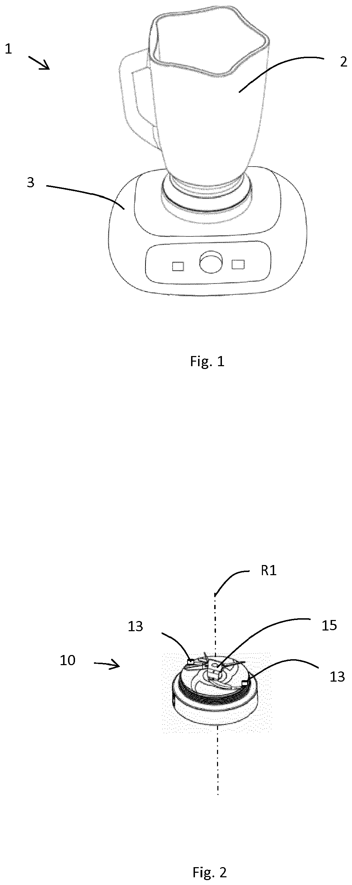

Reference is made to Fig. 1 which shows a kitchen device 1 with a jug 2. The jug 2 is shown in a side view in the mounted position when it is ready to be use for preparing food stuff. The jug 2 is mounted on a driving means 3 comprising electric motor controlled by electronic means for changing rotational speed (not shown), which is suitable for driving processing arrangement 10 provided with a processing tool 15, (not shown on the picture) mounted in the bottom of the jug 2.

Fig. 2 shows the processing arrangement 10 provided with a processing tool 15 namely in this case knife rotating . The processing arrangement 10 is provided with suitable coupling elements for mounting it in the bottom of the jug 2 (not shown). The processing arrangement 10 is provided with coupling means 13, in the form of a first part of the bayonet connection, a second part of the coupling means 13 is disposed in the insert unit 20 (not shown on this picture). This is for firmly and detachably connecting the processing arrangement 10 and the insert unit 20 (not shown on the picture).

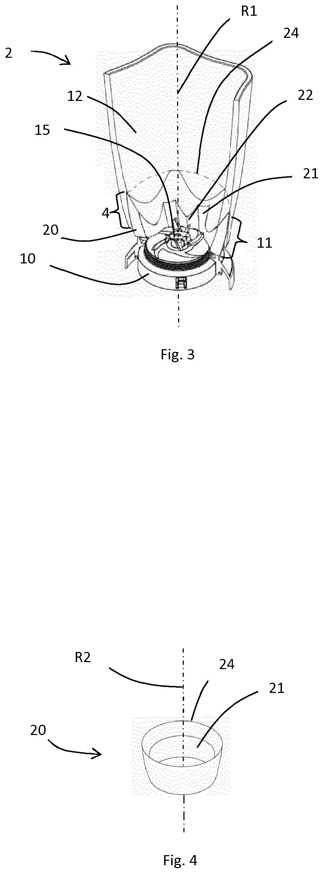

Reference is made to Fig. 3 shows the jug 2, the inner surface 12 of the jug 2, the insert unit 20, the processing arrangement 10, assembled each other and ready to work. The insert unit 20 is coaxially connected to the processing arrangement 10 by using the coupling means 13 realized by the bayonet connection (not shown on this picture). The processing arrangement 10 is mounted to the bottom of the jug 2. The Insert unit 20 is cup-shaped element, provided with the processing surface 21 on the inner surface of the insert unit 20, which surrounds the processing tool 15. The receiving surface 4 is filled with outer surface of the insert unit 20 at the bottom area 11. The processing surface 21 flows smoothly into the inner surface 12 of the jug 2. Said processing surface 21 having five longitudinal ribs 22 in the form of a prism, wherein the top of the prism is directed toward the rotational axis R1. Said insert unit 20 is intended for processing fluid.

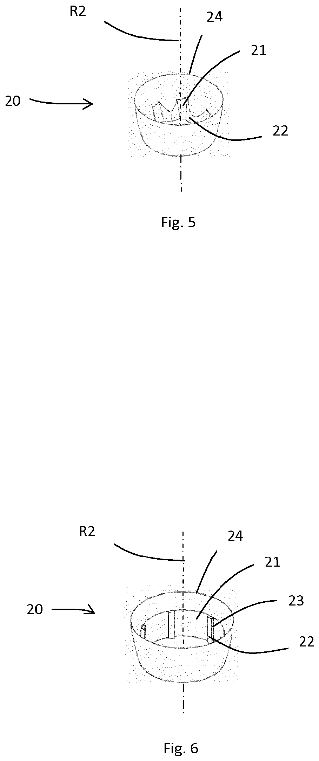

Fig. 4 - Fig.6 show three insert units 20 with a different processing surface 21 adapted for processing different kind of food. Said insert units 20 having the same outer size and frusto-conical outer shape. The jug 2 has a receiving surface 4 (not shown on the picture), dedicated for receiving insert unit 20. Each insert unit 20 comprises the second part of the bayonet connection (not shown on the picture) for mounting it on the processing arrangement 10. Fig. 4 shows the insert unit 20, equipped with a smooth cylindrical processing surface 21 created by surface of solid of revolution made by rotating a line around rotational axis R2which is not part of the invention. This insert unit is intended for efficiently processing chocolate or nuts. Fig. 5 shows the insert unit 20 having five longitudinal ribs 22 in the form of a prism, wherein the top of the prism is directed toward the rotational axis R2. Said insert unit 20 is intended for processing fluid. Fig. 6 shows the insert unit 20 dedicated for efficiently crushing ice cubes. In this case cylindrical processing surface 21 is provided with six flat ribs 22, arranged along the rotational axis R2. Said ribs 22 have the shape of the strips with sharp edges 23.

In the preferred embodiment of the invention, firstly, the insert unit is mounted on the processing arrangement by the coupling means realized by the bayonet connection, then they are placed and fixed in the bottom portion of the jug, at the time the jug is ready to work and can be placed on the driving means. Replacement of the insert unit to another one is easy and does not require a lot of time. Change the insert unit allows adapting the processing surface to efficiently processing different kind of food.

Although the invention has been explained in relation to its preferred embodiment(s) as mentioned above, it is to be understood that many other possible modifications and variations can be made without departing from the scope of the present invention. It is, therefore, contemplated that the appended claim or claims will cover such modifications and variations that fall within the true scope of the invention.

### LIST OF REFERENCE SIGNS

- 1: kitchen device
- 2: jug
- 3: driving means
- 4: receiving surface

- 10: processing arrangement
- 11: bottom area
- 12: inner surface
- 13: coupling means
- 15: processing tool

- 20: insert unit
- 21: processing surface
- 22: rib
- 23: edge
- 24: upper edge

- R1: rotational axis
- R2: rotational axis

## Claims

1. Kitchen device (1) for processing food stuff, comprising a driving means suitable for driving a processing arrangement (10) provided with a processing tool (15) and disposed in a bottom area (11) of a jug (2), at least one interchangeable insert unit (20) to be placed on the inner surface (12) of the bottom area (11) of the jug (2), said insert unit (20) being adapted to change the shape of the inner surface (12) in order to process different kinds of food stuff, wherein the insert unit (20) is detachably connected to the processing arrangement (10), the at least one insert unit (20) comprises a certain processing surface (21) for preparing specific food product, and has a frusto-conical shape, **characterized in that** said processing surface (21) of the insert unit (20) comprises at least one rib (22) arranged in parallel to the rotational axis (R2) of the insert unit (20).

2. Kitchen device according to claim 1, **characterized in that** the processing arrangement (10) having a coupling means (13) for mounting the insert unit (20) to the processing arrangement (10).

3. Kitchen device according to claim 2, **characterized in that** coupling means (13) is realized by snapping or bayonet or screwing or press fit connection.

4. Kitchen device according to any of the preceding claims, **characterized in that** the insert unit (20) is coaxially mounted to the processing arrangement (10).

5. Kitchen device according to any of the preceding claims, **characterized in that** the insert unit (20) is cup-shaped and surrounds the processing tool (15).

6. Kitchen device according to claim 1, **characterized in** the rib (22) having a shape of a strip, provided with edge (23).

7. Kitchen device according to claim 1, **characterized in** the rib (22) having a shape of the prism directed towards to a processing tool (15).

## Patentansprüche

1. Küchenvorrichtung (1) zum Verarbeiten von Lebensmitteln, die ein Antriebsmittel umfasst, das sich zum Antreiben einer Verarbeitungsanordnung (10) eignet, welche mit einem Verarbeitungswerkzeug (15) versehen und in einem unteren Bereich (11) eines Bechers (2) angeordnet ist, wobei mindestens eine austauschbare Einsteckeinheit (20) an der Innenfläche (12) des unteren Bereichs (11) des Bechers (2) platzierbar ist, wobei die Einsteckeinheit (20) so ausgelegt ist, dass sie die Form der Innenfläche (12) verändert, so dass verschiedene Arten Lebensmittel verarbeitet werden können, wobei die Einsteckeinheit (20) lösbar mit der Verarbeitungsanordnung (10) verbunden ist, die mindestens eine Einsteckeinheit (20) eine bestimmte Verarbeitungsfläche (21) zum Zubereiten von bestimmten Lebensmittelprodukten umfasst und eine Kegelstumpfform aufweist, **dadurch gekennzeichnet, dass** die Verarbeitungsfläche (21) der Einsteckeinheit (20) mindestens eine Rippe (22) umfasst, die parallel zur Rotationsachse (R2) der Einsteckeinheit (20) angeordnet ist.

2. Küchenvorrichtung nach Anspruch 1, **dadurch gekennzeichnet, dass** die Verarbeitungsanordnung (10) ein Koppelmittel (13) zum Anbringen der Einsteckeinheit (20) an der Verarbeitungsanordnung (10) aufweist.

3. Küchenvorrichtung nach Anspruch 2, **dadurch gekennzeichnet, dass** das Koppelmittel (13) durch eine Einschnapp- oder Bajonett- oder Schraub- oder Pressverbindung umgesetzt ist.

4. Küchenvorrichtung nach einem der vorhergehenden Ansprüche, **dadurch gekennzeichnet, dass** die Einsteckeinheit (20) koaxial an der Verarbeitungsanordnung (10) angebracht ist.

5. Küchenvorrichtung nach einem der vorhergehenden Ansprüche, **dadurch gekennzeichnet, dass** die Einsteckeinheit (20) tassenförmig ist und das Verarbeitungswerkzeug (15) umgibt.

6. Küchenvorrichtung nach Anspruch 1, **dadurch gekennzeichnet, dass** die Rippe (22) eine Streifenform mit einer Kante (23) aufweist.

7. Küchenvorrichtung nach Anspruch 1, **dadurch gekennzeichnet, dass** die Rippe (22) eine zu einem Verarbeitungswerkzeug (15) gerichtete Prismenform aufweist.

## Revendications

1. Dispositif de cuisine (1) pour la préparation des aliments, comprenant un dispositif de commande adapté à la commande d'un équipement de préparation (10) fourni avec un instrument de préparation (15) et disposé dans la zone inférieure (11) d'un pot (2), au moins une unité encastrable interchangeable (20) à placer sur la surface intérieure (12) de la zone inférieure (11) du pot (2), ladite unité encastrable (20) étant adaptée afin de modifier la forme de la surface intérieure (12) pour préparer différentes sortes d'aliments, dans lequel l'unité encastrable (20) est connectée de manière détachable à l'équipement de préparation (10), au moins l'une des unités encastrables (20) comprend une certaine surface de préparation (21) afin de préparer un produit alimentaire spécifique et possède une forme frusto-conique, **caractérisé en ce que** ladite surface de préparation (21) de l'unité encastrable (20) comprend au moins une nervure (22) disposée en parallèle à l'axe de rotation (R2) de l'unité encastrable (20).

2. Dispositif de cuisine selon la revendication 1, **caractérisé en ce que** l'équipement de préparation (10) possède un système de couplage (13) pour monter l'unité encastrable (20) sur l'équipement de préparation (10).

3. Dispositif de cuisine selon la revendication 2, **caractérisé en ce que** le système de couplage (13) est réalisé via une connexion par clic, baïonnette ou vis.

4. Dispositif de cuisine selon la revendication 1, **caractérisé en ce que** l'unité encastrable (20) est montée de manière coaxiale sur l'équipement de préparation (10).

5. Dispositif de cuisine selon l'une quelconque des revendications précédentes, **caractérisé en ce que** l'unité encastrable (20) est découpée et entoure l'instrument de préparation (15).

6. Dispositif de cuisine selon la revendication 1, **caractérisé en ce que** la nervure (22) a la forme d'une bande, pourvue d'un bord (23).

7. Dispositif de cuisine selon la revendication 1, **caractérisé en ce que** la nervure (22) a la forme d'un prisme dirigé vers l'instrument de préparation (15).
